(19) Europäisches Patentamt
European Patent Office
Office européen des brevets

(11) **EP 1 554 513 B2**

(12) **NOUVEAU FASCICULE DE BREVET EUROPEEN**
Après la procédure d'opposition

(45) Date de publication et mention de la décision concernant l'opposition:
**27.01.2016 Bulletin 2016/04**

(45) Mention de la délivrance du brevet:
**14.03.2007 Bulletin 2007/11**

(21) Numéro de dépôt: 03778428.7

(22) Date de dépôt: **21.10.2003**

(51) Int Cl.:
*F16K 3/12* *(2006.01)*   *F16K 3/316* *(2006.01)*

(86) Numéro de dépôt international:
**PCT/FR2003/003123**

(87) Numéro de publication internationale:
**WO 2004/038266 (06.05.2004 Gazette 2004/19)**

(54) **VANNE D'ARRET**

ABSPERRSCHIEBER

STOP VALVE

(84) Etats contractants désignés:
**AT BE BG CH CY CZ DE DK EE ES FI FR GB GR HU IE IT LI LU MC NL PT RO SE SI SK TR**
Etats d'extension désignés:
**LT LV**

(30) Priorité: **23.10.2002 FR 0213258**

(43) Date de publication de la demande:
**20.07.2005 Bulletin 2005/29**

(73) Titulaire: **Saint-Gobain PAM**
**54000 Nancy (FR)**

(72) Inventeurs:
• **BIDU, Philippe**
**F-54200 Dommartin Lès Toul (FR)**

• **GROJEAN, Daniel**
**F-54840 Gondreville (FR)**
• **MORECROFT, Richard**
**Nottingham (GB)**

(74) Mandataire: **Domenego, Bertrand**
**Cabinet Lavoix**
**2, place d'Estienne d'Orves**
**75441 Paris Cedex 09 (FR)**

(56) Documents cités:
| | |
|---|---|
| EP-A- 0 926 410 | AT-B- 405 758 |
| DE-A- 2 942 091 | DE-A- 3 345 133 |
| DE-A1- 2 843 163 | DE-B- 1 169 237 |
| GB-A- 724 577 | US-A- 5 470 046 |

EP 1 554 513 B2

**Description**

La présente invention concerne un coin d'arrêt pour une vanne d'arrêt, conformément au préambule de la revendication 1.

Un tel coin d'arrêt est connu de DE2843163.

Le document GB-A-724 577 décrit un autre coin d'arrêt.

Elle s'applique notamment aux vannes de sectionnement.

Une vanne de sectionnement est connue du document EP-A-0 926 410.

Cette vanne comprend un boîtier et un coin d'arrêt. Le coin d'arrêt comporte deux patins de guidage latéral coopérant avec des rainures longitudinales ménagées dans le boîtier, entre une position ouverte et une position fermée. Les patins de guidage sont situés à la hauteur de l'équibarycentre de la surface d'obturation projetée sur le plan de déplacement du coin d'arrêt. Cette disposition conduit à un équilibre du coin d'arrêt sous l'effort appliqué par le liquide lorsque la vanne est en position fermée, c'est-à-dire dans le cas statique.

Toutefois, lors de son déplacement entre ses positions ouverte et fermée, le coin d'arrêt de cette vanne est soumis à un couple de basculement. Le couple de basculement est généré par le champ de pression et de vitesse créé par l'écoulement de fluide qui rencontre l'opercule. Ce couple de basculement a pour effet de déplacer le coin d'arrêt hors du plan perpendiculaire au sens de déplacement du liquide. En conséquence, une lèvre d'étanchéité portée par le coin d'arrêt se trouve décalée par rapport aux surfaces d'étanchéité du boîtier, ce qui nuit à l'étanchéité de la vanne à l'état fermé.

La présente invention a pour but de pallier l'inconvénient cité, et de proposer une vanne d'arrêt qui assure une bonne étanchéité.

Un autre but de l'invention est d'indiquer une vanne d'arrêt qui a une longue durée de vie des éléments de guidage.

A cet effet l'invention a pour objet un coin d'arrêt du type précité, caractérisé par les caractéristiques de la partie caractérisante de la revendication 1.

Selon d'autres modes de réalisation du coin d'arrêt, celui-ci comporte les caractéristiques des revendications dépendantes 2 à 11.

L'invention a en outre pour objet une vanne d'arrêt comportant les caractéristiques de la revendication 12.

L'invention sera mieux comprise à la lecture de la description qui va suivre, donnée uniquement à titre d'exemple et faite en se référant aux dessins annexés, sur lesquels :

- la Figure 1 est une vue de côté du boîtier d'une vanne d'arrêt selon l'invention ;
- la Figure 2 est une vue en coupe de la vanne selon la ligne II-II de la Figure 1, le coin d'arrêt étant dans sa position ouverte ;
- la Figure 3 est une vue analogue à la vue de la Figure 2, le coin d'arrêt étant dans sa position fermée ;
- la Figure 4 est une vue schématique de plan d'un coin d'arrêt selon l'invention ; et
- les Figure 5 et 6 sont des vues en coupe du coin d'arrêt selon les lignes V-V et VI-VI de la Figure 4.

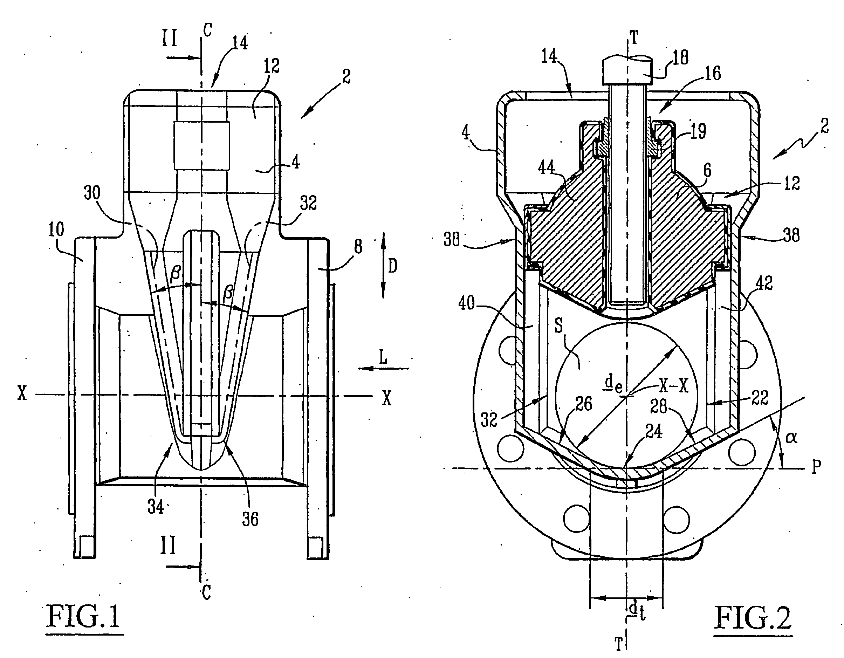

Sur les Figures 1 et 2 est représentée une vanne d'arrêt selon l'invention, désignée par la référence générale 2.

Cette vanne d'arrêt 2 est destinée à être insérée dans une conduite d'alimentation en liquide (non représentée), par exemple d'eau, afin d'arrêter en cas de besoin l'écoulement de liquide.

La vanne d'arrêt 2 comprend un boîtier de vanne 4 et un obturateur 6 mobile en translation désigné dans la suite par coin d'arrêt.

Le boîtier de vanne 4 est rendu solidaire de la conduite d'alimentation en un liquide, s'écoulant suivant un sens d'écoulement $\underline{L}$, au moyen d'un raccord d'entrée 8 et d'un raccord de sortie 10. Les deux raccords 8, 10 sont disposés coaxialement par rapport à un axe central X-X d'écoulement du liquide, et définissent une section d'écoulement S circulaire (Figure 2) de diamètre $\underline{d_e}$. A l'état monté de la vanne d'arrêt 2, l'axe X-X s'étend horizontalement.

Le boîtier de vanne 4 comprend en outre un logement 12 pour le coin d'arrêt 6, disposé entre les deux raccords 8, 10. Le logement 12 comprend, dans sa partie supérieure, une ouverture 14 d'introduction et de manoeuvre du coin d'arrêt 6. Dans ce qui suit, l'expression « proximale » désignera une localisation proche de cette ouverture 14, tandis que l'expression « distale » sera utilisée pour des localisations décalées ou éloignées de cette ouverture 14 dans le sens dirigé vers l'axe X-X.

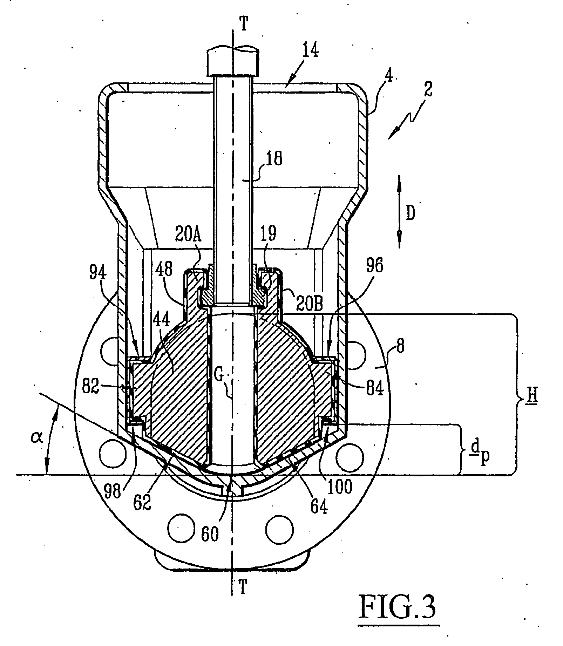

Le coin d'arrêt 6 est disposé dans le logement 12 de façon à pouvoir coulisser entre une position ouverte, dans laquelle le liquide peut passer sans obstacle du raccord d'entrée 8 au raccord de sortie 10, et une position fermée, représentée à la Figure 3, dans laquelle le liquide est retenu dans le raccord d'entrée 8. Le coin d'arrêt 6 peut coulisser en translation suivant une direction de déplacement D verticale dans un plan de déplacement C-C, plan qui s'étend perpendiculairement à la direction X-X d'écoulement du liquide.

La vanne 2 comprend en outre des moyens d'entraînement 16 du coin d'arrêt 6 entre ses deux positions ouverte et fermée. Ces moyens d'entraînement 16 comprennent une tige filetée 18 s'étendant radialement à l'axe X-X dans le plan C-C suivant un axe vertical T-T. Dans ce qui suit les expressions « médiane » et « latérale » seront utilisées par rapport à cet axe T-T.

La tige 18 comporte une extrémité proximale de manoeuvre, qui fait saillie hors du boîtier 4, ainsi qu'une extrémité distale, qui s'étend au voisinage de la section d'écoulement S sans la chevaucher. La tige 18 est mobile en rotation mais fixe axialement par rapport au boîtier 4 et reliée à des moyens extérieurs d'entraînement en rotation (non représentés).

Les moyens d'entraînement 16 du coin d'arrêt 6 comprennent en outre un bloc 19 en profil de T, fixé au coin d'arrêt 6, bloc dans lequel est ménagé un taraudage à l'intérieur duquel est vissée la tige filetée 18.

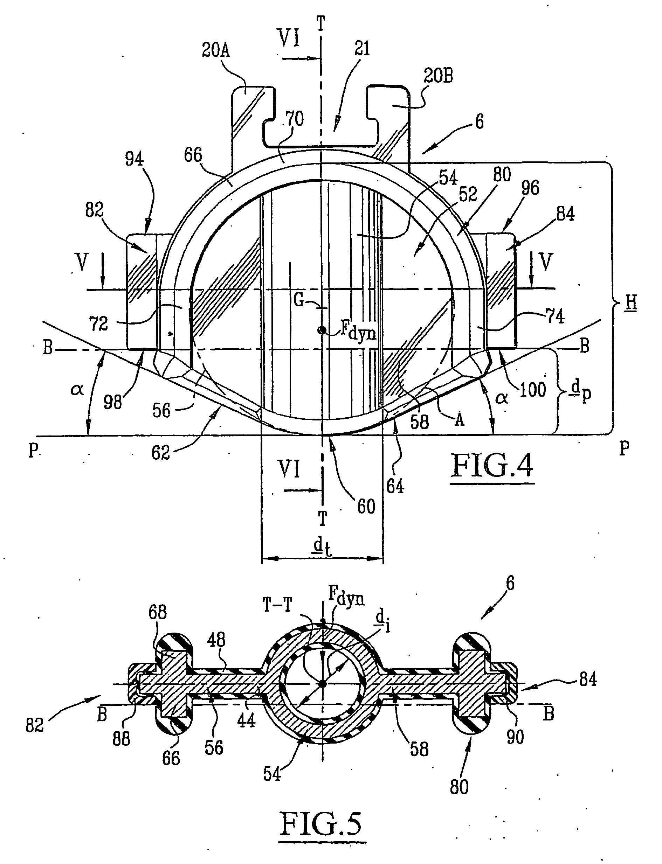

Par ailleurs, comme représenté aux Figures 3 et 4, deux équerres de retenue 20A, 20B font saillie sur l'extrémité proximale du coin, parallèlement à l'axe T-T et étant coudées vers celui-ci. Elles forment un réceptacle 21 complémentaire au bloc taraudé 19 pour la réception de celui-ci.

Le logement 12 du boîtier définit un siège d'étanchéité 22 du coin d'arrêt 6. Ce siège d'étanchéité 22 comprend une surface d'appui distale médiane 24, deux surfaces d'appui distales latérales 26, 28, et deux surfaces d'appui proximales latérales 30, 32, dont une est visible sur la Figure 2.

La surface d'appui distale médiane 24 est située en vis-à-vis de l'extrémité distale de la tige filetée 18. Elle a une forme de cylindre partiel d'axe X-X; dont le diamètre est identique au diamètre $d_e$ de la section d'écoulement S des raccords 8, 10. Vue suivant l'axe T-T, elle a une forme circulaire de diamètre $d_t$ légèrement supérieur au diamètre de la tige filetée 18. Chacune des deux surfaces d'appui distales latérales 26, 28 se raccorde tangentiellement à la surface d'appui distale médiane 24 dans le plan C-C, de part et d'autre de l'axe T-T. Les deux surfaces d'appui distales latérales 26, 28 sont rectilignes sur toute leur longueur. Elles forment un angle $\alpha$ avec un plan P-P s'étendant perpendiculairement à l'axe T-T. Cet angle $\alpha$ est inférieur à 30°, notamment inférieur à 20° et de préférence inférieur à 10°. Grâce à cette faible inclinaison, la pression exercée sur la partie de la lèvre d'étanchéité du coin d'arrêt 6 correspondant aux surfaces 24, 26, 28 est importante pour une force d'application donnée. De plus, la lèvre d'étanchéité est soumise à des faibles forces de cisaillement.

De plus, l'inclinaison étant supérieure à 0°, des salissures, qui sont éventuellement apportées par le liquide, sont empêchées de se déposer. Le siège d'étanchéité 22 est donc auto-nettoyant.

Vue suivant l'axe X-X la partie distale du siège d'étanchéité 22 est sensiblement en forme de flèche à pointe arrondie.

Les deux surfaces d'appui proximales 30, 32 s'étendent de part et d'autre du plan C-C et ont une forme générale de fer à cheval. Elles sont inclinées par rapport au plan C-C d'un angle $\beta$ (voir Figure 1). L'angle $\beta$ peut être compris entre 10° et 35°. Chacune des deux surfaces d'appui proximales 30, 32 entoure la section d'écoulement S du côté proximal. Comme illustré sur la Figure 1, les extrémités distales des deux surfaces d'appui proximales 30, 32 sont reliées aux extrémités proximales latérales des surfaces d'appui distales latérales 26, 28 par deux épaulements 34, 36.

Par ailleurs, la vanne d'arrêt 2 comporte des moyens 38 de guidage du coin d'arrêt 6 dans le logement 12.

Les moyens de guidage 38 comprennent des rainures de guidage 40, 42, qui s'étendent sensiblement dans le plan C-C et parallèlement à l'axe T-T, et ceci à partir des extrémités proximales latérales des surfaces d'appui distales latérales 26, 28, vers l'ouverture 14 du logement.

Le coin d'arrêt 6 comporte un panneau d'obturation qui est constitué essentiellement d'un noyau 44 en matière rigide, par exemple de la fonte, et d'un revêtement 48 en matière plastique élastique, par exemple en caoutchouc ou en élastomère.

Le revêtement 48 entoure le noyau 44 complètement et assure une protection contre la corrosion de celui-ci.

Le coin d'arrêt 6 comprend un voile 52 qui délimite une surface d'arrêt A. La surface d'arrêt A est définie comme la surface libre du coin d'arrêt 6 qui entre en contact avec du liquide sous pression, lorsque le coin d'arrêt est dans sa position fermée, projetée sur le plan de déplacement C-C. L'équibarycentre de cette surface d'arrêt est nommé G. Dans sa position fermée, le coin d'arrêt 6 arrête le liquide sur la surface d'arrêt A. Dans l'exemple présent, l'équibarycentre G est proche de l'axe X-X lorsque le coin d'arrêt 6 est dans sa position fermée. La surface d'arrêt A présente une hauteur $H$ mesurée suivant l'axe de déplacement T-T.

Le voile 52 est constitué d'un tube central 54 cylindrique creux et de deux ailes 56, 58.

Le tube central 54 est disposé, à l'état monté, coaxialement à l'axe T-T de la tige filetée 18. Le diamètre intérieur $d_i$ du tube central 54 est supérieur au diamètre extérieur de la tige filetée 18 de telle sorte que le tube 54 peut recevoir la tige 18. Le diamètre extérieur du tube central 54 correspond au diamètre $d_t$ de la surface d'appui distale médiane 24 vu suivant l'axe T-T. L'extrémité distale 60 du tube central 54, vue suivant l'axe X-X, a un profil en arc de cercle de diamètre $d_e$.

Les deux ailes 56, 58 sont des parties pleines de paroi qui s'étendent de part et d'autre de l'axe T-T, suivant le plan de déplacement C-C. La partie distale de chaque aile 56, 58 comprend un bord rectiligne 62, 64 qui, en vue de côté, se raccorde tangentiellement à l'arc de cercle de l'extrémité distale 60 du tube central 54. Les bords 62, 64 ont une forme complémentaire aux surfaces d'appui distales latérales 26, 28 du boîtier 4. Chaque bord 62, 64 est incliné suivant l'angle $\alpha$ par rapport au plan P-P. De plus, les deux bords rectilignes 62, 64 s'étendent, à partir de l'arc de cercle, sur toute la largeur du voile 52, mesurée dans le plan de déplacement C-C perpendiculairement à l'axe de déplacement T-T.

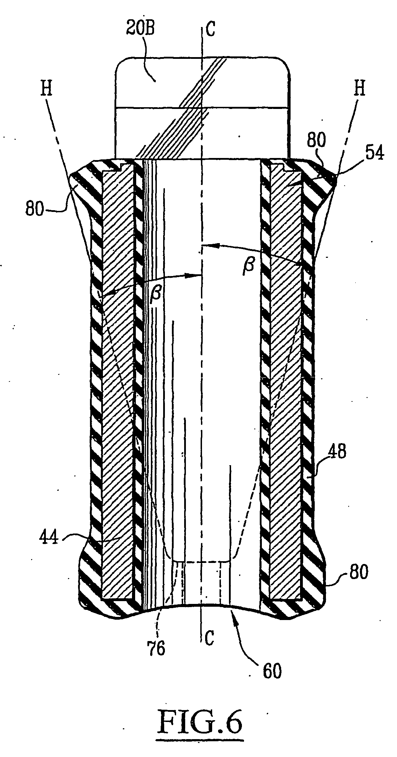

Comme représenté aux Figures 4 et 5, le coin d'arrêt 6 comporte en outre deux nervures d'étanchéité 66, 68 en forme de fer à cheval, complémentaires aux surfaces d'appui proximales 30, 32 du boîtier 4. Les nervures d'étanchéité 66, 68 font saillie sur la surface du voile 52 perpendiculairement au plan de déplacement C-C, de part et d'autre de ce plan. La partie proximale 70 des nervures d'étanchéité 66, 68 est en forme de demi-cylindre creux. Elle est prolongée, à chaque extrémité distale, par une partie de nervure 72, 74 rectiligne qui s'étend jusqu'à l'extrémité latérale du bord 62, 64 de chacune des ailes 56, 58. A cet emplacement la nervure 66, 68 forme une pointe tronquée 76, représentée en trait mixte sur la Figure 6, correspondant aux épaulements 34, 36 du boîtier.

Comme il ressort de la Figure 6, chaque nervure 66, 68 est délimitée par un plan H-H qui est incliné suivant l'angle β sur le plan C-C, et qui coupe ce plan au-delà de l'extrémité distale 60 du tube central 54. La hauteur de chaque nervure 66, 68 mesurée par rapport au plan C-C diminue donc de son extrémité proximale jusqu'à son extrémité distale.

Le bord de chaque nervure 66, 68, l'extrémité distale 60 du tube central 54, et le bord distal 62, 64 de chaque aile 56, 58 sont constitués d'un bourrelet du revêtement 48 formant lèvre d'étanchéité 80. Cette lèvre d'étanchéité 80 est de forme complémentaire à la surface du siège d'étanchéité 22 du logement 12 du boîtier 4.

Le coin d'arrêt 6 comporte en outre deux embouts de guidage 82, 84 faisant partie des moyens de guidage 38 du coin d'arrêt 6. Ces embouts sont propres à coulisser dans les rainures 40, 42. Chaque embout de guidage 82, 84 est formé par une projection latérale du noyau 44 revêtue, couverte par un patin de glissement 88, 90 par exemple en matière plastique rigide à haute résistance contre l'abrasion, telle que du polyamide. Les patins de glissement 88, 90 sont fixés par surmoulage de la matière du revêtement 48 sur les projections du noyau 44.

Les embouts de guidage 82, 84 s'étendent suivant la direction de déplacement D. Chacun des embouts 82, 84 a une extrémité proximale 94, 96 et une extrémité distale 98, 100. L'extrémité distale 98, 100 de chaque embout de guidage 82, 84 est disposée à une distance $d_p$ de l'extrémité distale 60 du tube central 54, mesurée suivant l'axe de déplacement T-T.

Lors du déplacement du coin d'arrêt 6 vers sa position fermée, le liquide exerce une force dynamique $\underline{F}_{dyn}$ sur le coin d'arrêt, qui est dirigée dans le sens d'écoulement de liquide $\underline{L}$.

Les extrémités distales 98, 100 des embouts de guidage 82, 84 sont disposées de telle sorte que le point d'application de la résultante de cette force dynamique $\underline{F}_{dyn}$, au moins immédiatement avant la fermeture totale, est située du côté proximal des extrémités distales 98, 100.

Le rapport $\dfrac{\underline{d}_p}{\underline{H}}$ entre les grandeurs $\underline{d}_p$ et $\underline{H}$ est choisi inférieur à 0,34, notamment inférieur à 0,3 et de préférence inférieur à 0,25.

Plus ce rapport est petit, plus le couple de basculement exercé par $\underline{F}_{dyn}$ est grand au moment de la fermeture de la vanne.

La vanne d'arrêt est assemblée de la façon suivante.

Le boîtier 4 et le noyau 44 du coin d'arrêt 6 sont fabriqués en fonte. Le revêtement 48 en élastomère est surmoulé sur le noyau 44. Puis les patins de glissement 88, 90 sont enfichés sur les projections du noyau 44 du coin d'arrêt 6 et fixés sur les projections. Ensuite, le bloc taraudé 19 est enfiché entre les équerres de retenue 20A, 20B et la tige filetée 18 est vissée dans le taraudage. Le coin d'arrêt 6 et la tige filetée 18 sont insérés dans le boîtier 4 à travers l'ouverture 14. Enfin, la tige 18 est reliée au boîtier 4 et aux moyens d'entraînement en rotation.

Pendant le fonctionnement, lorsque le coin d'arrêt 6 se trouve dans sa position ouverte, le liquide peut librement traverser le boîtier 4. Lorsque l'écoulement de liquide doit être arrêté, par exemple dans le cas d'une rupture de la conduite située en aval de la vanne 2, la tige filetée 18 est entraînée en rotation, de telle sorte que le coin d'arrêt 6 se déplace vers sa position fermée, suivant la direction D.

A partir du moment où le coin d'arrêt 6 chevauche la section d'écoulement S, le liquide exerce sur le coin d'arrêt 6 la force dynamique $\underline{F}_{dyn}$ de basculement dirigée dans le sens aval. Cette force sollicite dans, un premier temps, le coin d'arrêt 6 dans le sens d'un basculement hors du plan de déplacement C-C, autour du bloc taraudé 20. Pendant la poursuite du déplacement, le point d'application de la résultante de la force dynamique $\underline{F}_{dyn}$ se déplace de l'extrémité distale 60 vers le milieu du coin d'arrêt 6. Lorsque le point d'application de la résultante de la force dynamique $\underline{F}_{dyn}$ franchit le niveau des extrémités distales 98, 100 des embouts de guidage 82, 84, le coin d'arrêt 6 bascule autour d'un axe B-B. Cet axe B-B est défini par les parties des embouts de guidage 82, 84 en application sur les rainures de guidage 40, 42. A partir de cet instant, les embouts de guidage 82, 84 sont appliqués sut toute leur hauteur sur les rainures de guidage.

En conséquence, le coin d'arrêt 6 s'étend parallèlement au plan C-C, de sorte que l'application de l'extrémité distale du coin d'arrêt 6 est effectuée perpendiculairement à la surface d'étanchéité. Ainsi, la vanne d'arrêt assure une bonne étanchéité.

Grâce au fait que les extrémités distales 98, 100 des embouts de guidage 82, 84 se trouvent à faible distance de l'extrémité distale 60 du tube central 54, et donc de l'extrémité distale du coin d'arrêt 6, mesurée dans la direction D, le coin d'arrêt se trouve maintenu au voisinage de son extrémité distale, à une grande distance de l'axe de basculement. Ainsi, pour une pression donnée du liquide, la force appliquée sur l'extrémité inférieure des patins est faible. En conséquence, le décalage de la lèvre d'étanchéité 80 par rapport au siège d'étanchéité 22 est faible, ce qui conduit à une bonne étanchéité de la vanne d'arrêt 2 pour une force d'appui donnée du coin d'arrêt 6 contre le siège d'étanchéité 22.

Par ailleurs, la force appliquée aux patins de glissement 88, 90 est faible, ce qui conduit à une faible usure de ceux-ci.

En outre, étant donné que le décalage du coin d'arrêt hors du plan C-C est limité, les forces d'actionnement de la tige filetée 18 sont faibles. Les moyens d'entraînement en rotation de la tige (moto-réducteur) peuvent avoir une force nominale faible et être économiques.

En variante, le coin d'arrêt comprend des rainures de guidage latéral au lieu des embouts de guidage. Dans ce cas, le boîtier de vanne comprend des embouts de guidage correspondants et les rainures du coin d'arrêt coopèrent avec ces embouts.

## Revendications

**1.** Coin d'arrêt pour une vanne d'arrêt, adapté pour être déplacé en translation suivant un axe de déplacement (T-T) qui est compris dans un plan de déplacement (C-C) dans un boîtier de vanne (4) et qui s'étend transversalement à la direction (X-X) d'écoulement d'un liquide, du type comprenant :

> - un panneau d'obturation qui présente une extrémité proximale comprenant des moyens de liaison (20A, 20B) à des moyens d'entraînement (16) du coin d'arrêt (6) et une extrémité distale (60) adaptée pour être appliquée contre un siège d'étanchéité (22) du boîtier de vanne (4);
> - deux organes de guidage latéral (82, 84) adaptés pour coopérer avec des organes de guidage complémentaires (40, 42) du boîtier de vanne (4) en vue d'un déplacement du coin d'arrêt (6) entre des positions ouverte et fermée de la vanne d'arrêt (2) ;

> le coin d'arrêt ayant une surface d'arrêt (A) qui est définie comme la surface libre du coin d'arrêt (6), qui entre en contact avec du liquide sous pression, projetée sur le plan de déplacement (C-C), lorsque le coin d'arrêt (6) est dans sa position fermée, les extrémités distales (98, 100) des organes de guidage latéral (82, 84) étant espacées de l'extrémité distale (60) du coin d'arrêt (6) d'une distance $\underline{d}_p$ mesurée suivant l'axe de déplacement (T-T), la surface d'arrêt (A) présentant une hauteur $\underline{H}$ mesurée suivant l'axe de déplacement (T-T), le coin d'arrêt comprenant un voile (52), vu suivant la direction d'écoulement du liquide (X-X), l'extrémité distale (60) du voile (52) présentant un profil sensiblement en arc de cercle dans la région de l'axe de déplacement (T-T) et deux bords rectilignes (62, 64) se raccordant tangentiellement à cet arc de chaque côté de l'axe de déplacement (T-T),

> **caractérisé en ce que** le rapport $\dfrac{\underline{d}_p}{\underline{H}}$ est inférieur à 0,34,
> et **en ce que** l'angle (α) compris entre un plan (P-P)

s'étendant perpendiculairement à l'axe de déplacement (T-T) et chacun des bords rectilignes (62, 64) est inférieur à 30°, notamment inférieur à 20°, et de préférence inférieur à 10°.

**2.** Coin d'arrêt selon la revendication 1,

**caractérisé en ce que** le rapport $\dfrac{d_p}{H}$ est inférieur à 0,3, et de préférence inférieur à 0,25.

**3.** Coin d'arrêt selon l'une quelconque des revendications 1 ou 2, **caractérisé en ce que** les deux bords rectilignes (62, 64) s'étendent, à partir de l'arc de cercle, sur toute la largeur du voile (52), mesurée dans le plan de déplacement (C-C) perpendiculairement à l'axe de déplacement (T-T).

**4.** Coin d'arrêt selon l'une quelconque des revendications 1 à 3, **caractérisé en ce que** l'angle (α) est supérieur à 0°.

**5.** Coin d'arrêt selon l'une quelconque des revendications 1 à 4, **caractérisé en ce que** le voile (52) comprend un tube central (54) s'étendant coaxialement à l'axe de déplacement (T-T) et deux ailes latérales (56, 58) s'étendant d'un côté et de l'autre du tube central (54) suivant le plan de déplacement (C-C), l'extrémité distale (60) du voile (52) dans la région de l'axe de déplacement (T-T) étant formée par une extrémité du tube central (54).

**6.** Coin d'arrêt selon l'une quelconque des revendications 1 à 5, **caractérisé en ce que** les organes de guidage latéral comprennent des embouts de guidage latéral (82, 84) adaptés pour coopérer avec des rainures de guidage (40, 42) du boîtier de vanne.

**7.** Coin d'arrêt selon l'une quelconque des revendications précédentes, **caractérisé en ce que** les embouts de guidage latéral (82, 84) sont recouvertes de patins de glissement (88, 90) en matière plastique rigide, notamment en polyamide.

**8.** Coin d'arrêt selon la revendication 7, **caractérisé en ce que** les patins de glissement (88, 90) sont reliés au noyau (44) par surmoulage de la matière plastique du revêtement (48).

**9.** Coin d'arrêt selon l'une quelconque des revendications 1 à 5, **caractérisé en ce que** les organes de guidage latéral comprennent des rainures de guidage ménagées dans le coin d'arrêt.

**10.** Coin d'arrêt selon l'une quelconque des revendications précédentes, **caractérisé en ce que** le panneau d'obturation comprend :

- un noyau (44), notamment en fonte ; et
- un revêtement (48) en matière plastique élastique formant une lèvre d'étanchéité (80).

11. Coin d'arrêt selon la revendication 10, **caractérisé en ce que** le revêtement (48) entoure complètement le noyau (44).

12. Vanne d'arrêt comprenant un boîtier de vanne d'arrêt et un coin d'arrêt, le boîtier de vanne (4) comprenant un logement (12) du coin d'arrêt (6), logement qui délimite un siège d'étanchéité (22) et qui a une ouverture d'introduction (14) du coin d'arrêt (6), le siège d'étanchéité (22) présentant une surface d'appui distale (24, 26, 28) située en vis-à-vis de l'ouverture d'introduction (14), cette surface d'appui (24, 26, 28) comportant une surface d'appui distale médiane (24) de profil cylindrique partiel et deux surfaces d'appui distales latérales rectilignes (26, 28), qui se raccordent tangentiellement à la surface d'appui distale médiane (24), **caractérisée en ce que** le coin d'arrêt est conforme à l'une quelconque des revendications précédentes.

## Patentansprüche

1. Absperrkeil für ein Absperrventil, welcher angepasst ist, in Translation entlang einer Bewegungsachse (T-T), welche in einer Bewegungsebene (C-C) in einem Ventilgehäuse (4) enthalten ist, bewegt zu werden, und welcher sich quer zu der Richtung (X-X) der Strömung einer Flüssigkeit erstreckt, des Typs aufweisend:

   - eine Verschlussplatte, welche ein proximales Ende, das Mittel zum Verbinden (20A, 20B) mit Mitteln zum Antreiben (16) des Absperrkeils (6) aufweiset, und ein distales Ende (60) hat, das angepasst ist, gegen einen Dichtsitz (22) des Ventilgehäuses (4) gesetzt zu werden,
   - zwei Elemente zum seitlichen Führen (82, 84), welche angepasst sind, mit komplementären Elementen zum Führen (40, 42) des Ventilgehäuses (4) für eine Bewegung des Absperrkeils (6) zwischen einer Offen-Position und einer Geschlossen-Position des Absperrventils (2) zusammenzuwirken,

   wobei der Absperrkeil eine Absperrfläche (A) aufweist, welche als die freie Fläche des Absperrkeils (6) definiert ist, welche in Kontakt der Flüssigkeit unter Druck kommt, projiziert auf die Bewegungsebene (C-C), wenn der Absperrkeil (6) in seiner Geschlossen-Position ist, wobei die distalen Enden (98, 100) der Elemente zum seitlichen Führen (82, 84) von dem distalen Ende (60) des Absperrkeils (6) um einen Abstand $d_p$, gemessen entlang der Bewegungsachse (T-T) im Abstand sind, wobei die Absperrfläche (A) eine Höhe H gemessen entlang der Bewegungsachse (T-T) aufweist, wobei der Absperrkeil einen Körper (52) aufweist, wobei, gesehen in der Richtung der Strömung der Flüssigkeit (X-X), das distale Ende (60) des Körpers (52) ein Profil im Wesentlichen in Form eines Kreisbogens in dem Bereich der Bewegungsachse (T-T) und zwei geradlinige Ränder (62, 64) aufweist, welche sich tangential an diesen Bogen auf jeder Seite der Bewegungsachse (T-T) anschließen,
**dadurch gekennzeichnet, dass** das Verhältnis $d_p/H$ weniger als 0,34 ist und dass der Winkel ($\alpha$), welcher sich zwischen einer Ebene (P-P), welche sich senkrecht zu der Bewegungsachse (T-T) erstreckt, und jedem der geradlinigen Ränder (62, 64) befindet, weniger als 30°, insbesondere weniger als 20°, und vorzugsweise weniger als 10° ist.

2. Absperrkeil nach Anspruch 1, **dadurch gekennzeichnet, dass** das Verhältnis $d_p/H$ weniger als 0,3 und vorzugsweise weniger als 0,25 ist.

3. Absperrkeil nach einem der Ansprüche 1 oder 2, **dadurch gekennzeichnet, dass** die zwei geradlinigen Ränder (62, 64) sich von dem Kreisbogen aus über die ganze Breite des Körpers (52) erstrecken, gemessen in der Bewegungsebene (C-C) senkrecht zu der Bewegungsachse (T-T).

4. Absperrkeil nach einem der Ansprüche 1 bis 3, **dadurch gekennzeichnet, dass** der Winkel ($\alpha$) größer als 0° ist.

5. Absperrkeil nach einem der Ansprüche 1 bis 4, **dadurch gekennzeichnet, dass** der Körper (52) ein Zentralrohr (54), welches sich koaxial zu der Bewegungsachse (T-T) erstreckt, und zwei seitliche Flügel (56, 58) aufweist, welche sich beiderseits des Zentralrohrs (54) entlang der Bewegungsebene (C-C) erstrecken, wobei das distale Ende (60) des Körpers (52) in dem Bereich der Bewegungsachse (T-T) durch ein Ende des Zentralrohrs (54) gebildet ist.

6. Absperrkeil nach einem der Ansprüche 1 bis 5, **dadurch gekennzeichnet, dass** die Elemente zum seitlichen Führen seitliche Ansätze zum Führen (82, 84) aufweisen, welche angepasst sind, um mit Rillen zum Führen (40, 42) des Ventilgehäuses zusammenzuwirken.

7. Absperrkeil nach einem der vorhergehenden Ansprüche, **dadurch gekennzeichnet, dass** die Ansätze zum seitlichen Führen (82, 84) mit Gleitkufen (88, 90) aus starrem Kunststoffmaterial, insbesondere aus Polyamid, überdeckt sind.

8. Absperrkeil nach Anspruch 7, **dadurch gekenn-**

**zeichnet, dass** die Gleitkufen (88, 90) mit dem Kern (44) durch Überspritzen des Kunststoffmaterials der Beschichtung (48) verbunden sind.

9. Absperrkeil nach einem der Ansprüche 1 bis 5, **dadurch gekennzeichnet, dass** die Elemente zum seitlichen Führen Rillen zum Führen, vorgesehen in dem Absperrkeil, aufweisen.

10. Absperrkeil nach einem der vorhergehenden Ansprüche, **dadurch gekennzeichnet, dass** die Verschlussplatte aufweist:

  - einen Kern (44), insbesondere aus Gusseisen, und
  - eine Beschichtung (48) aus elastischem Kunststoffmaterial, welche eine Dichtlippe (80) bildet.

11. Absperrkeil nach Anspruch 10, **dadurch gekennzeichnet, dass** die Beschichtung (48) den Kern (44) vollständig umgibt.

12. Absperrventil aufweisend ein Absperrventilgehäuse und einen Absperrkeil, wobei das Ventilgehäuse (4) eine Aufnahme (12) für den Absperrkeil (6) aufweist, wobei die Aufnahme einen Dichtsitz (22) begrenzt und eine Einführöffnung (14) für den Absperrkeil (6) aufweist, wobei der Dichtsitz (22) eine distale Fläche zum Anlegen (24, 26, 28) aufweist, welche sich gegenüber der Einführöffnung (14) befindet, wobei diese Fläche zum Anlegen (24,26 28) eine mittlere distale Fläche zum Anlegen (24) von partiellem zylindrischem Profil und zwei geradlinige seitliche distale Flächen zum Anlegen (26, 28) aufweist, welche sich tangential an der mittleren distalen Fläche zum Anlegen (24) anschließen, **dadurch gekennzeichnet, dass** der Absperrkeil nach einem der vorhergehenden Ansprüche ist.

**Claims**

1. Closure wedge for a shutoff valve, designed to be displaced in translation along a displacement axis (T-T) which is disposed in a displacement plane (C-C) in a valve casing (4) and which extends transversely to the flow direction (X-X) of a liquid, of the type comprising:

  - a shutter panel having a proximal end comprising means (20A, 20B) for establishing a connection to means (16) for driving the closure wedge (6) and a distal end (60) designed to be applied against a seal seat (22) of the valve casing (4);
  - two lateral guide members (82, 84) designed to co-operate with complementary guide members (40, 42) of the valve casing (4) with a view to displacing the closure wedge (6) between open and closed positions of the shutoff valve (2) ;

the closure wedge having a stop surface (A) which is defined as the free surface of the closure wedge (6) which comes into contact with the pressurised liquid projected onto the displacement plane (C-C) when the closure wedge (6) is in its closed position, the distal ends (98, 100) of the lateral guide members (82, 84) being spaced apart from the distal end (60) of the closure wedge (6) by a distance $\underline{d}_p$ measured along the displacement axis (T-T), the stop surface (A) having a height $\underline{H}$ measured along the displacement axis (T-T), the closure wedge comprising a screen (52), as viewed in the flow direction of the liquid (X-X), the distal end (60) of the screen (52) having a contour that is substantially a circle arc in the region of the displacement axis (T-T) and two straight edges (62, 64) joined to this arc at a tangent on each side of the displacement axis (T-T), **characterised in that** the ratio $\frac{d_p}{H}$ is less than 0.34,

and **in that** the angle ($\alpha$) subtended by a plane (P-P) extending perpendicular to the displacement axis (T-T) and each of the straight edges (62, 64) is less than 30°, in particular less than 20°, and preferably less than 10°.

2. Closure wedge as claimed in claim 1, **characterised in that** the ratio $\frac{d_p}{H}$ is less than 0.3 and preferably less than 0.25.

3. Closure wedge as claimed in any one of claims 1 or 2, **characterised in that** the two straight edges (62, 64) extend from the circle arc across the entire width of the screen (52), measured in the displacement plane (C-C) perpendicular to the displacement axis (T-T).

4. Closure wedge as claimed in any one of claims 1 to 3, **characterised in that** the angle ($\alpha$) is greater than 0°.

5. Closure wedge as claimed in any one of claims 1 to 4, **characterised in that** the screen (52) comprises a central tube (54) extending coaxially with the displacement axis (T-T) and two lateral flanges (56, 58) extending on either side of the central tube (54) along the displacement plane (C-C), the distal end (60) of the screen (52) being formed by an end of the central tube (54) in the region of the displacement axis (T-T).

6. Closure wedge as claimed in any one of claims 1 to 5, **characterised in that** the lateral guide members comprise lateral guide pieces (82, 84) designed to co-operate with guide grooves (40, 42) of the valve casing.

7. Closure wedge as claimed in any one of the preceding claims, **characterised in that** the lateral guide pieces (82, 84) are covered by slide shoes (88, 90) made from rigid plastic material, in particular polyamide.

8. Closure wedge as claimed in claim 7, **characterised in that** the slide shoes (88, 90) are connected to the core (44) by moulding onto the plastic material of the facing (48).

9. Closure wedge as claimed in any one of claims 1 to 5, **characterised in that** the lateral guide members comprise guide grooves provided in the closure wedge.

10. Closure wedge as claimed in any one of the preceding claims, **characterised in that** the shutter panel comprises:

    - a core (44), in particular of cast iron; and
    - a facing (48) of elastic plastic material forming a sealing lip (80).

11. Closure wedge as claimed in claim 10, **characterised in that** the facing (48) completely surrounds the core (44) .

12. Shutoff valve comprising a shutoff valve casing and a closure wedge, the valve casing (4) comprising a housing (12) for the closure wedge (6), which housing bounds a seal seat (22) and which has an opening (14) for inserting the closure wedge (6), the seal seat (22) having a distal support surface (24, 26, 28) disposed facing the insertion opening (14), this support surface (24, 26, 28) comprising a median distal support surface (24) with a partial cylindrical contour and two straight, lateral distal support surfaces (26, 28) which are joined to the median distal support surface (24) at a tangent, **characterised in that** the closure wedge is as claimed in any one of the preceding claims.

FIG.1

FIG.2

EP 1 554 513 B2

FIG.3

FIG.4

FIG.5

**FIG.6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 2843163
- GB 724577 A

- EP 0926410 A